# EUROPÄISCHE PATENTSCHRIFT

(11) **EP 2 941 379 B1**
(45) Veröffentlichungstag und Bekanntmachung des Hinweises auf die Patenterteilung: **31.08.2022**
(21) Anmeldenummer: 14703521.6
(22) Anmeldetag: 03.01.2014
(51) Int. Cl.: B62B 5/00, B60L 1/00, B60L 7/18, B60L 15/20, B60L 50/20

(54) **ZUR BEWEGUNG DURCH MUSKELKRAFT VORGESEHENE VORRICHTUNG, INSBESONDERE FAHRZEUG**
DEVICE PROPELLED BY MUSCULAR POWER, IN PARTICULAR VEHICLE
DISPOSITIF PROPULSÉ PAR LA FORCE MUSCULAIRE, EN PARTICULIER VÉHICULE

(30) Priorität: 07.01.2013 DE 102013100088
(43) Veröffentlichungstag der Anmeldung: 11.11.2015
(73) Patentinhaber: Strothmann, Rolf, 66780 Rehlingen-Siersburg (DE)
(72) Erfinder: Strothmann, Rolf, 66780 Rehlingen-Siersburg (DE)
(74) Vertreter: Patentanwälte Bernhardt / Wolff Partnerschaft mbB
(86) Internationale Anmeldenummer: PCT/DE2014/100001
(87) Internationale Veröffentlichungsnummer: WO 2014/106509

(56) Entgegenhaltungen:
- EP-A1- 1 114 763
- DE-A1- 10 008 451
- DE-A1-102010 020 906
- US-A1- 2007 062 774

## Beschreibung

Die Erfindung betrifft eine zur Bewegung durch Muskelkraft vorgesehene Vorrichtung, insbesondere ein Fahrzeug, mit einer die Bewegung der Vorrichtung zusätzlich zu der Muskelkraft (F_{B}) beeinflussenden, eine Antriebs- oder/und Bremskraft (F_{M}) erzeugenden elektrischen Maschine, wenigstens einem Sensor zur Messung der auf die Vorrichtung einwirkenden Muskelkraft (F_{B}) und Einrichtungen zur Steuerung der Erzeugung der Antriebs- oder/und Bremskraft (F_{M}) durch die elektrische Maschine anhand des Messsignals (F_{B'}) des Sensors, wobei die Einrichtungen zur Steuerung der Erzeugung der weiteren Kraft (F_{M}) Lastmittel für die Umwandlung durch die elektrische Maschine generatorisch erzeugter Elektroenergie in eine andere Energieform umfassen eine durch die elektrische Maschine erzeugte Elektroenergie speichernde Batterie vorgesehen ist.

Neben Fahrzeugen sehr unterschiedlicher Art und für gänzlich verschiedene Zwecke kann es sich bei einer solchen, durch Muskelkraft zu bewegenden Vorrichtung beispielsweise auch um einen Gleitschlitten einer Werkzeugmaschine oder einen verschwenkbaren Lastentragarm handeln. In jedem Fall geht es um ein unter Einwirkung von Muskelkraft in Bewegung zu versetzendes oder/und zu haltendes Objekt.

Aus der WO 95/03096 ist ein zum Teil die eingangs erwähnten Merkmale aufweisender Golfcaddy mit einem elektrischen Hilfsantrieb bekannt. Der in einem Handgriff einer Zug-/ Schubstange des Caddys untergebrachte Sensor erfasst die auf den Handgriff einwirkende Zug- bzw. Schubkraft. Die elektrische Maschine des Hilfsantriebs übt eine zusätzliche Antriebs- oder/und Bremskraft jeweils so aus, dass unabhängig von den Geländebedingungen der Benutzer sowohl auf ansteigender als auch abschüssiger Fahrstrecke stets den gleichen, bequem bemessenen Fahrwiderstand zu überwinden hat. Die elektrische Maschine unterstützt den Benutzer bei ansteigender Fahrbahn, bei abfallender Fahrbahn bremst sie. Die beim Bremsen entstehende Elektroenergie wird in einer die Bremslast bildenden Batterie gespeichert, die ansonsten Betriebsstrom für die Erzeugung von Antriebskräften liefert. Weitere, zur generatorischen Bremsung Lastmittel verwendende Vorrichtungen gehen aus EP 1 114 763 A1, DE 10 2010 020 906 A1 und US 2007/062774 A1 hervor.

Eine Vorrichtung der eingangs erwähnten Art ist in DE 100 08 451 A1 beschrieben.

Ein Deichselstangen aufweisender Schubkarren weist einen Nabenmotor in Form eines Gleichstromreihenschlussmotors auf. Durch einen mit Schaltmitteln verbundenen Kraftsensor, der im Handgriff an einer Deichselstange angebracht ist, werden abhängig von der anliegenden Kraft unterschiedliche Zahlen von Vorwiderständen zugeschaltet, so dass der Gleichstromreihenschlussmotor stufenweise steuerbar ist. Der Gleichstromreihenschlussmotor lässt sich auf Generatorbetrieb umschalten, wobei der Generatorstrom über einen festen Lastwiderstand fließt.

Der Erfindung liegt die Aufgabe zugrunde, eine neue, durch Muskelkraft bewegbare Vorrichtung der eingangs genannten Art mit verbesserten Möglichkeiten zur Steuerung der Krafterzeugung durch die elektrische Maschine zu schaffen.

Die diese Aufgabe lösende Vorrichtung nach der Erfindung gemäß Anspruch 1 ist dadurch gekennzeichnet, dass die Steuereinrichtungen ferner zur automatischen Steuerung der Verteilung durch die elektrische Maschine generatorisch erzeugter Elektroenergie auf die Lastmittel und die Batterie vorgesehen und dass die Steuereinrichtung zur automatischen Steuerung der Verteilung abhängig von der Größe der weiteren Kraft (F_{M}) und/oder dem Ladezustand der Batterie vorgesehen sind.

Vorteilhaft erlauben die erfindungsgemäßen Lastmitteln die automatische Erzeugung von Bremskräften durch die elektrische Maschine, welche z.B. hangabwärts dem Benutzer die Aufbringung unbequemer Gegenhaltekräfte ersparen oder für einen gewünschten, vom Benutzer zu überwindenden Fahrwiderstand sorgen. Insbesondere ergibt sich in Kombination mit einer Batterie, die sowohl eine Antriebsenergiequelle als auch eine Last für die elektrische Maschine bildet und welche durch die elektrische Maschine erzeugte Elektroenergie speichert, der Vorteil, dass bei vollständig geladener (oder entfernter) Batterie weiterhin die Möglichkeit zur Erzeugung von Bremskräften besteht, indem die Batterie als Last durch die Lastmittel abgelöst wird.

Erfindungsgemäß ist die Steuereinrichtung zur automatischen Steuerung der Verteilung durch die elektrische Maschine generatorisch erzeugter Elektroenergie auf die Lastmittel und die Batterie vorgesehen, wobei die Verteilung abhängig von der Größe der weiteren Kraft (F_{M}) oder/und dem Ladezustand der Batterie erfolgt.

Zweckmäßig weisen die Steuereinrichtungen Schaltmittel zur Zuschaltung der Lastmittel oder/und der Batterie zu der elektrischen Maschine als Last auf.

Insbesondere können die Steuereinrichtungen zur periodischen Zuschaltung der Batterie zu der elektrischen Maschine als Last über einen variierenden Zeitanteil der Periodendauer (T) vorgesehen sein.

In weiterer Ausgestaltung der Erfindung können die Steuereinrichtungen unterschiedliche Zeitanteile und/oder Periodendauern für die Zuschaltung der Lastmittel und der Batterie einstellen. Auf diese Weise lässt sich die generatorisch erzeugte Elektroenergie beliebig auf die Batterie und die Lastmittel verteilen.

In einer besonders bevorzugten Ausführungsform der Erfindung sind Einrichtungen zur Abführung von Wärme von den Lastmitteln, insbesondere in Form einer Lüftungskühlung, vorgesehen.

In weiterer Ausgestaltung der Erfindung ist der Lastwiderstand durch die Wicklungen der elektrischen Maschine selbst gebildet und die elektrische Maschine zur Erzeugung einer Bremskraft, insbesondere periodisch zeitweise, kurzschließbar.

Zweckmäßig ist die elektrische Maschine in letzterem Fall mit einer wärmeabführenden Einrichtung versehen, insbesondere einer Lüftungskühlung zur Durchströmung der Wicklungen.

Die genannte Steuereinrichtung kann zur Einstellung der Antriebs- oder/und Bremskraft entsprechend einem vorgegebenen funktionalen Zusammenhang (F_{M} = f(F_{B})) zwischen der Antriebs- oder/und Bremskraft (F_{M}) und der Muskelkraft F_{B} bzw. dem Messsignal (F_{B'}) des Sensors vorgesehen sein. Vorzugsweise ist die Steuereinrichtung zur Einstellung der Antriebs- oder/und Bremskraft unter Einregelung eines als konstanter Wert oder durch den funktionalen Zusammenhang vorgegebenen Wertes des Messsignals des Sensors vorgesehen.

Die erfindungsgemäße Vorrichtung ist insbesondere zur Bewegung durch eine auf die Vorrichtung von außen einwirkende Zug- oder/und Schubkraft vorgesehen.

In einer Ausführungsform handelt es sich bei der Vorrichtung um einen Golfcaddy.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine erfindungsgemäße fahrbare Vorrichtung in verschiedenen Fahrzuständen,
- Fig. 2: eine Schemadarstellung einer Baugruppe der Vorrichtung von Fig. 1, die eine elektrische Maschine umfasst,
- Fig. 3: eine die Erzeugung einer Bremskraft durch die elektrische Maschine von Fig. 2 erläuternde Darstellung,
- Fig. 4 und 5: weitere Ausführungsbeispiele für elektrische Maschinen und Steuereinrichtungen umfassende Baugruppe erfindungsgemäßer Vorrichtungen.

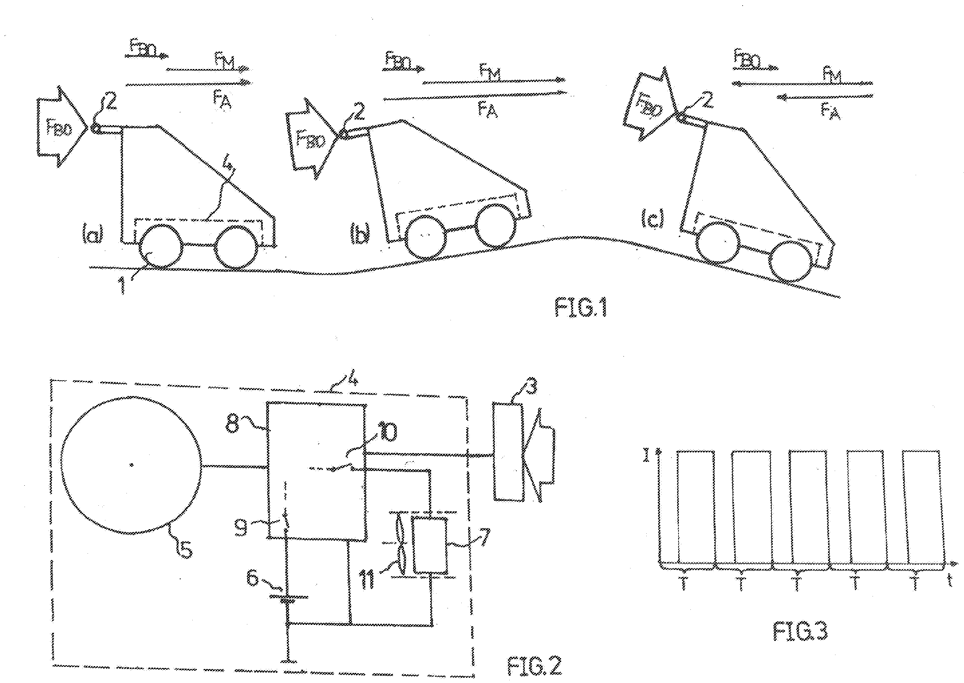

Ein durch Muskelkraft bewegbares Fahrzeug weist Räder 1 und eine Griffstange 2 auf. Über die Griffstange 2 lässt sich das Fahrzeug schieben oder ziehen. In der Griffstange 2 ist ein in Fig. 2 schematisch dargestellter Sensor 3 untergebracht, der auf die Griffstange 2 einwirkende Schub- oder Zugkräfte misst.

Das Fahrzeug weist ferner eine Baugruppe 4 auf, die in dem gezeigten Beispiel einen dreiphasigen Synchronmotor 5, eine Batterie 6, einen Lastwiderstand 7 und eine Schalt- und Regeleinrichtung 8 umfasst. Die Schalt- und Regeleinrichtung 8 steuert zum einen eine Bestromung der elektrischen Maschine 5 durch die Batterie 6 nach dem Impulsweitenmodulationsverfahren zum anderen eine generatorische Stromerzeugung durch diese Maschine.

Die Schalt- und Regeleinrichtung 8 empfängt ferner ständig das für die Schuboder Zugkraft F_{B} am Handgriff 2 repräsentative Messsignal F_{B'} des Sensors 3. Dieses Messsignal vergleicht sie mit einem vorgegebenen Wert, der einer bestimmten, in Fig. 1 durch einen Pfeil symbolisierten Schub- oder Zugkraft F_{B0} entspricht, welche der Benutzer des Fahrzeugs aufzubringen hat. Es versteht sich, dass F_{B0} bequem bemessen sein kann.

In dem gezeigten Ausführungsbeispiel regelt die Schalt- und Regeleinrichtung 8 das ständig empfangene Messsignal F_{B'} auf diesen vorgegebenen, der Kraft F_{B0} entsprechenden Wert ein, indem sie eine unterstützende oder entgegenwirkende Kraft F_{M} der elektrischen Maschine 5 stets so einstellt, dass die Summe der Kräfte F_{B0} und F_{M} gleich der zur Aufrechterhaltung einer gleichförmigen oder gleichmäßig beschleunigten Bewegung des Fahrzeugs erforderlichen Antriebslast F_{A} ist.

Wie Fig. 1 zeigt, kann sich die zur Aufrechterhaltung einer gleichförmigen Bewegung des Fahrzeugs erforderliche Antriebslast F_{A} entlang einer Fahrbahn abhängig von deren Steigung oder Gefälle ändern. Gegenüber der Position (a) des Fahrzeugs hat sich in dessen Position (b) die zur Aufrechterhaltung einer gleichförmigen Bewegung erforderliche Antriebslast F_{A} infolge Anstiegs der Fahrbahn erhöht. Die Schalt- und Regeleinrichtung 8 hat unter Konstanthaltung der vom Benutzer aufzubringenden Kraft F_{B0} entsprechend dieser Erhöhung die antreibende Kraft F_{M} der elektrischen Maschine 5 erhöht.

In der Position (c) nimmt infolge Gefälle die zur Aufrechterhaltung einer gleichförmigen Bewegung des Fahrzeugs erforderliche Antriebslast F_{A} negative Werte an, d.h. das Fahrzeug ist in dieser Position abzubremsen. Die Schalt- und Regeleinrichtung 8 sorgt in diesem Fall für eine generatorische Erzeugung einer der Fahrtrichtung entgegengerichteten negativen Kraft F_{M} der elektrischen Maschine 5. Der Betrag dieser negativen Kraft ist in dem gezeigten Ausführungsbeispiel so groß, dass der Benutzer weiterhin die positive, bequem bemessene Kraft F_{B0} ausüben muss.

Bei noch stärkerem Gefälle und Überschreitung der bei der vorhandenen Geschwindigkeit generatorisch maximal erzeugbaren Bremskraft kann zusätzlich eine motorische Bremsung durch entsprechende Bestromung der elektrischen Maschine 5 erfolgen.

Abweichend von dem vorangehend beschriebenen Beispiel, bei dem eine Einregelung auf eine konstante, durch den Benutzer aufzubringende Kraft F_{B0} erfolgt, könnte die Kraft F_{B0} auch durch Einstellung von Hand oder automatisch veränderbar und insbesondere abhängig von der erforderlichen Antriebslast F_{A} sein. Die Schalt- und Regeleinrichtung 8 kann Steuermittel aufweisen, welche die Kraft F_{M} der elektrischen Maschine 5 entsprechend einem funktionalen Zusammenhang F_{M} = f(F_{B}) einstellen. Je nach erforderlicher Betriebslast F_{A} = f(F_{B}) + F_{B} regelt sich dann die jeweilige, dem funktionalen Zusammenhang f(F_{B}) entsprechende, durch den Benutzer aufzubringende, in diesem Fall lastabhängige Kraft F_{B0} ein.

Die in Fig. 2 gezeigte Schalt- und Regeleinrichtung 8 umfasst also Steuermittel, die im Falle der Notwendigkeit einer Bremskraft, d.h. einer negativen Kraft F_{M}, die Größe des durch die elektrische Maschine 5 generatorisch erzeugten Stromes und somit die zur Aufrechterhaltung der Bewegung erforderliche Bremskraft F_{M} einstellt.

Es versteht sich, dass für die Höhe der Stromstärke des durch die elektrische Maschine 5 generatorisch erzeugten Stromes die durch die Batterie 6 oder/und den Lastwiderstand 7 gebildete Last maßgebend ist. Die Fähigkeit der Batterie 6, einen Generatorstrom aufzunehmen, hängt von deren Ladezustand ab. Bei vollständiger Aufladung kommt die Batterie 6 als Last für die Erzeugung einer Bremskraft F_{M} nicht in Betracht.

Um eine erforderliche Bremskraft F_{M} dennoch einstellen zu können, nutzt die Schalt- und Regeleinrichtung 8 als Last daher je nach Ladezustand entweder die Batterie 6 oder den Lastwiderstand 7. Ein Generatorstrom kann auch über eine Parallelschaltung aus Batterie 6 und Lastwiderstand 7 fließen. Bei Nutzung der Batterie 6 als Bremslast wird diese unter Rekuperation von Antriebsenergie geladen.

Da die erforderlichen Bremskräfte F_{M} z.B. abhängig vom Grad eines Fahrbahngefälles variieren, könnte zur Einstellung entsprechend unterschiedlicher Bremskräfte F_{M} z.B. der Lastwiderstand 7 in seinem Widerstandswert variierbar sein.

In dem gezeigten Beispiel erfolgt die Einstellung unterschiedlicher Bremskräfte F_{M} jedoch bei konstantem Widerstandswert durch periodische Unterbrechung des Stromflusses I in die Batterie 6 oder/und durch den Lastwiderstand 7. Zu diesem Zweck enthält die Schalt- und Regeleinrichtung 8 entsprechende Unterbrechermittel 9 und 10. Während der Unterbrechungen des Generatorstroms innerhalb aufeinanderfolgender Perioden T (Fig. 3) läuft die elektrische Maschine 5 leer und entwickelt keine Bremskraft. Während der übrigen Zeitabschnitte der Perioden T fließt der volle Generatorstrom I. Je nach Zeitanteil der Unterbrechungen in den Perioden T ergibt sich ein mittlerer Generatorstrom I, der zwischen null bei dauerhafter Unterbrechung und dem vollen Strom I ohne Unterbrechung variieren kann. Entsprechend lässt sich eine Bremskraft F_{M} zwischen null und der maximalen, von der jeweiligen Drehgeschwindigkeit der elektrischen Maschine 5 abhängigen Bremskraft einstellen.

Das Bezugszeichen 11 in Fig. 2 weist auf eine Lüftungskühleinrichtung hin, welche Wärme von dem Lastwiderstand 7 abführt. Vorteilhaft kann bei geringen Abmessungen des Lastwiderstands 7 dessen Widerstandswert durch die Luftkühlung gering gehalten und ggf. konstant geregelt werden.

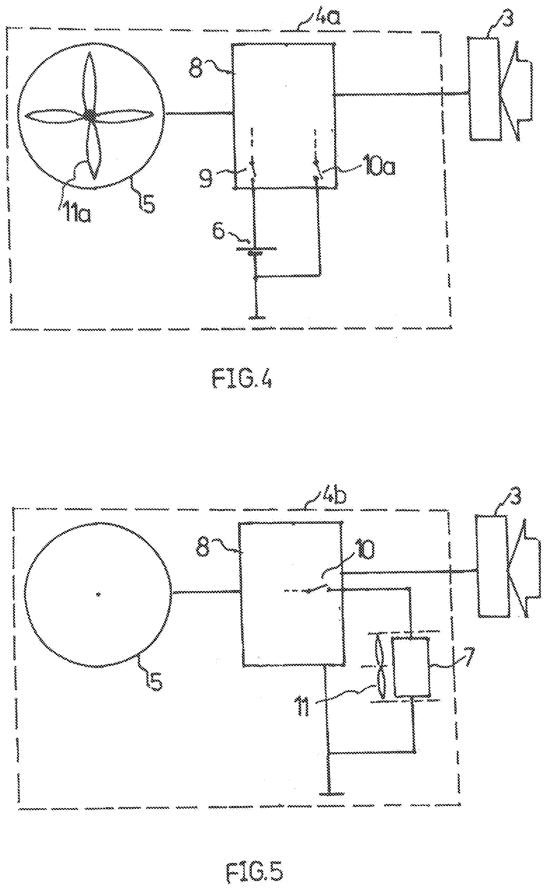

Fig. 4 zeigt eine alternative Ausführungsform einer Baugruppe 4a, die im Unterschied zu der Baugruppe 4 keinen gesonderten Lastwiderstand aufweist. Als Lastwiderstand dienen die Wicklungen der elektrischen Maschine 5. Zur Einstellung einer Bremskraft F_{M} über diesen Lastwiderstand wird die elektrische Maschine 5 periodisch in der in Fig. 3 gezeigten Weise jeweils über einen Zeitabschnitt einer Periode T kurzgeschlossen. Je nach Zeitanteil des Kurzschlusses an der Periode T schwankt die eingestellte Bremskraft F_{M} zwischen null und dem für die betreffende Drehzahl der elektrischen Maschine geltenden Maximalwert. Zur Abfuhr der entstehenden Wärme dient eine Luft durch die elektrische Maschine 5 drückende Lüftungskühleinrichtung 11a.

Eine in Fig. 5 gezeigte weitere Ausführungsform einer Baugruppe 4b unterscheidet sich von der Baugruppe 4 durch Fehlen der Batterie 6. Die elektrische Maschine 5 dient ausschließlich zur Erzeugung einer Bremskraft F_{M}. Entsprechend eignet sich diese Ausführungsform insbesondere für einen Rollator, der dem Benutzer stets, auch auf abschüssiger Fahrbahn, einen gewünschten geringen Fahrwiderstand entgegensetzt.

Es versteht sich, dass für letztere Ausführungsform auch die in Fig. 4 gezeigte Variante ohne äußeren allein durch die Wicklungen der elektrischen Maschine gebildeten Lastwiderstand in Betracht kommt.

Es versteht sich ferner, dass durch die elektrische Maschine erzeugte Elektroenergie durch die Lastmittel nur zu einem Teil in eine andere Energieform umgewandelt und im Übrigen zum Betrieb von Komponenten der Vorrichtung, wie z.B. Elektronik oder Steuerung, genutzt wird.

## Patentansprüche

1. Zur Bewegung durch Muskelkraft vorgesehene Vorrichtung, insbesondere Fahrzeug, mit einer die Bewegung der Vorrichtung zusätzlich zu der Muskelkraft (F_{B}) beeinflussenden, eine weitere Kraft (F_{M}) erzeugenden elektrischen Maschine (5), wenigstens einem Sensor (3) zur Messung der auf die Vorrichtung einwirkenden Muskelkraft (F_{B}) und Einrichtungen (6-11) zur Steuerung der Erzeugung der weiteren Kraft (F_{M}) durch die elektrische Maschine (5) anhand des Messsignals des Sensors (3), wobei die Einrichtungen (6-11) zur Steuerung der Erzeugung der weiteren Kraft (F_{M}) Lastmittel (7) für die Umwandlung durch die elektrische Maschine (5) generatorisch erzeugter Elektroenergie in eine andere Energieform umfassen und eine durch die elektrische Maschine (5) erzeugte Elektroenergie speichernde Batterie (6) vorgesehen ist,
**dadurch gekennzeichnet,**
**dass** die Steuereinrichtungen (6-11) ferner zur automatischen Steuerung der Verteilung durch die elektrische Maschine (5) generatorisch erzeugter Elektroenergie auf die Lastmittel (7) und die Batterie (6) vorgesehen sind und dass die Steuereinrichtungen (6-11) zur automatischen Steuerung der Verteilung abhängig von der Größe der weiteren Kraft (F_{M}) oder/und dem Ladezustand der Batterie (6) vorgesehen sind.

2. Vorrichtung nach Anspruch 1,
**dadurch gekennzeichnet,**
**dass** die Steuereinrichtungen (6-11) Schaltmittel (9,10) zur Zuschaltung der Lastmittel (7) und/oder der Batterie (6) zu der elektrischen Maschine (5) als Last aufweisen.

3. Vorrichtung nach einem der Ansprüche 1 bis 2,
**dadurch gekennzeichnet,**
**dass** die Steuereinrichtungen (6-11) zur periodischen Zuschaltung der Lastmittel (7) und/oder der Batterie (6) zu der elektrischen Maschine (5) als Last über einen variierenden Zeitanteil der Periodendauer (T) vorgesehen sind.

4. Vorrichtung nach Anspruch 3,
**dadurch gekennzeichnet,**
**dass** die Steuereinrichtungen (6-11) zur Einstellung unterschiedlicher Zeitanteile oder/und Periodendauern (T) für die Zuschaltung der Lastmittel (7) und die Zuschaltung der Batterie (6) vorgesehen sind.

5. Vorrichtung nach einem der Ansprüche 1 bis 4,
**dadurch gekennzeichnet,**
**dass** die Lastmittel einen Lastwiderstand (7) umfassen, dessen Widerstandswert durch die Steuereinrichtungen (6-11) variierbar ist.

6. Vorrichtung nach Anspruch 5,
**dadurch gekennzeichnet,**
**dass** der Lastwiderstand durch die Wicklungen der elektrischen Maschine (5) gebildet und die elektrische Maschine (5) zur Erzeugung einer Bremskraft (F_{M}), insbesondere periodisch zeitweise, kurzschließbar ist.

7. Vorrichtung nach Anspruch 5 oder 6,
**dadurch gekennzeichnet,**
**dass** Einrichtungen zur Abführung von Wärme von dem Lastwiderstand (7), insbesondere in Form einer Lüftungskühlung (11), vorgesehen sind.

8. Vorrichtung nach einem der Ansprüche 1 bis 7,
**dadurch gekennzeichnet,**
**dass** die Steuereinrichtungen (6-11) zur Einstellung der weiteren Kraft (F_{M}) entsprechend einem vorgegebenen funktionalen Zusammenhang zwischen der weiteren Kraft (F_{M}) und dem Messsignal (F_{B'}) des Sensors (3) vorgesehen sind.

9. Vorrichtung nach einem der Ansprüche 1 bis 8,
**dadurch gekennzeichnet,**
**dass** die Steuereinrichtungen (6-11) zur Einstellung der weiteren Kraft unter Einregelung eines als konstanter oder durch den funktionalen Zusammenhang vorgegebenen Wertes des Messsignals (F_{B0'}) des Sensors (3) vorgesehen sind.

## Claims

1. Device, in particular vehicle, intended to be moved by muscle power, comprising an electric machine (5) which influences the movement of the device in addition to the muscle force (F_{B}) and which produces an additional force (F_{M}), at least one sensor (3) for measuring the muscle force (F_{B}) acting on the device, and apparatuses (6-11) for controlling the generation of the additional force (F_{M}) by the electric machine (5) on the basis of the measurement signal of the sensor (3), wherein the apparatuses (6-11) for controlling the generation of the additional force (F_{M}) comprise load means (7) for converting electrical energy generated by the electric machine (5) operating as a generator to another form of energy, and a battery (6) which stores electrical energy generated by the electric machine (5) is provided,
**characterized in that**
the control apparatuses (6-11) are also provided to automatically control the distribution of electrical energy generated by the electric machine (5) operating as a generator over the load means (7) and the battery (6) and **in that** the control apparatuses (6-11) are provided to automatically control the distribution depending on the magnitude of the additional force (F_{M}) or/and the state of charge of the battery (6).

2. Device according to Claim 1,
**characterized in that**
the control apparatuses (6-11) comprise switching means (9, 10) for connecting the load means (7) and/or the battery (6) to the electric machine (5) as load.

3. Device according to one of Claims 1 to 2,
**characterized in that**
the control apparatuses (6-11) are provided to periodically connect the load means (7) and/or the battery (6) to the electric machine (5) as load over a varying proportion of time of the period (T).

4. Device according to Claim 3,
**characterized in that**
the control apparatuses (6-11) are provided to set different proportions of time or/and periods (T) for the connection of the load means (7) and the connection of the battery (6).

5. Device according to one of Claims 1 to 4,
**characterized in that**
the load means comprise a load resistor (7), the resistance value of which is able to be varied by the control apparatuses (6-11).

6. Device according to Claim 5,
**characterized in that**
the load resistor is formed by the windings of the electric machine (5) and the electric machine (5) is able to be short-circuited, in particular periodically temporarily, in order to produce a braking force (F_{M}).

7. Device according to Claim 5 or 6,
**characterized in that**
apparatuses are provided to dissipate heat from the load resistor (7), in particular in the form of ventilation cooling (11).

8. Device according to one of Claims 1 to 7,
**characterized in that**
the control apparatuses (6-11) are provided to set the additional force (F_{M}) according to a predefined functional relationship between the additional force (F_{M}) and the measurement signal (F_{B'}) of the sensor (3).

9. Device according to one of Claims 1 to 8,
**characterized in that**
the control apparatuses (6-11) are provided to set the additional force by controlling a value of the measurement signal (F_{B0'}) of the sensor (3) which is predefined as constant or by the functional relationship.

## Revendications

1. Dispositif prévu pour être déplacé par la force musculaire, en particulier véhicule, comprenant une machine électrique (5) qui influence le mouvement du dispositif en plus de la force musculaire (F_{B}) et qui génère une autre force (F_{M}), au moins un capteur (3) pour mesurer la force musculaire (F_{B}) agissant sur le dispositif, et des moyens (6-11) pour commander la génération de l'autre force (F_{M}) par la machine électrique (5) à l'aide du signal de mesure du capteur (3),
dans lequel
les moyens (6-11) pour commander la génération de l'autre force (F_{M}) comprennent des moyens de charge (7) pour transformer l'énergie électrique, générée en mode générateur par la machine électrique (5), en une autre forme d'énergie, et
il est prévu une batterie (6) stockant l'énergie électrique générée par la machine électrique (5),
**caractérisé en ce que**
les moyens de commande (6-11) sont en outre prévus pour commander automatiquement la répartition de l'énergie électrique générée en mode générateur par la machine électrique (5) entre les moyens de charge (7) et la batterie (6), et
les moyens de commande (6-11) sont prévus pour commander automatiquement la répartition en fonction de l'intensité de l'autre force (F_{M}) ou/et de l'état de charge de la batterie (6).

2. Dispositif selon la revendication 1,
**caractérisé en ce que**
les moyens de commande (6-11) comportent des moyens de commutation (9, 10) pour mettre en circuit, en tant que charge, les moyens de charge (7) et/ou la batterie (6) sur la machine électrique (5).

3. Dispositif selon l'une des revendications 1 à 2,
**caractérisé en ce que**
les moyens de commande (6-11) sont prévus pour mettre en circuit périodiquement, en tant que charge, les moyens de charge (7) et/ou la batterie (6) sur la machine électrique (5) pendant une fraction de temps variable de la durée de la période (T).

4. Dispositif selon la revendication 3,
**caractérisé en ce que**
les moyens de commande (6-11) sont prévus pour régler des fractions de temps ou/et des durées de période (T) différentes pour la mise en circuit des moyens de charge (7) et pour la mise en circuit de la batterie (6).

5. Dispositif selon l'une des revendications 1 à 4,
**caractérisé en ce que**
les moyens de charge comprennent une résistance de charge (7) dont la valeur de résistance est variable par les moyens de commande (6-11).

6. Dispositif selon la revendication 5,
**caractérisé en ce que**
la résistance de charge est formée par les enroulements de la machine électrique (5), et la machine électrique (5) peut être court-circuitée, en particulier périodiquement par moments, pour générer une force de freinage (F_{M}).

7. Dispositif selon la revendication 5 ou 6,
**caractérisé en ce que**
il est prévu des moyens pour évacuer la chaleur de la résistance de charge (7), en particulier sous la forme d'un refroidissement par ventilation (11).

8. Dispositif selon l'une des revendications 1 à 7,
**caractérisé en ce que**
les moyens de commande (6-11) sont prévus pour régler l'autre force (F_{M}) selon une relation fonctionnelle prédéterminée entre l'autre force (F_{M}) et le signal de mesure (F_{B'}) du capteur (3).

9. Dispositif selon l'une des revendications 1 à 8,
**caractérisé en ce que**
les moyen de commande (6-11) sont prévus pour régler l'autre force en régulant une valeur du signal de mesure (F_{B0'}) du capteur (3) qui est prédéterminée comme constante ou prédéterminée par la relation fonctionnelle.
